# EUROPEAN PATENT APPLICATION

(11) **EP 1 510 728 A2**
(43) Date of publication of application: **02.03.2005**
(21) Application number: 04292078.5
(22) Date of filing: 24.08.2004
(51) Int. Cl.: F16H 3/66

(54) **Multi-speed automatic transmission for motor vehicle**

(30) Priority: 25.08.2003 JP 2003208514
(71) Applicant: Kyowa Metal Works Co., Ltd, Yokohama-shi, Kanagawa 236-0002 (JP)
(72) Inventor: Hiraiwa, Kazuyoshi, Yokohama-shi Kanagawa-ken 236-0052 (JP)
(74) Representative: Intès, Didier Gérard André

(57) **Abstract**

A 6-speed automatic transmission has a first planetary gear set (14) and second planetary gear sets (16) interposed between an input and the output shafts (10, 12). The first planetary gear set (14) is a double pinion type, the second planetary gear sets (16) are Ravigneaux type. The planetary gear sets (14, 16) are controlled by a first clutch (52) for engaging a first ring gear (22) and a second ring gear (32), a second clutch (54) for engaging a first ring gear (22) and a second sun gear (30), a third clutch (58) for engaging a third ring gear (42) and the input shaft (10), a first brake (56) for fixing a third sun gear (40) to a case (50); and a second brake (60) for fixing the third ring gear (42) to the case (50).

## Description

The present invention relates to a multi-speed automatic transmission for a motor vehicle which can obtain more than forward 5-speed.

A multi-speed automatic transmission for a motor vehicle of this kind is disclosed in Japanese patent laying-open publications (Tokkaihei) No. 2001-182785 and No. 2003-130152. The former multi-speed automatic transmission has a double-pinion type first planetary gear set arranged at upstream side and Ravigneaux type second planetary gear sets arranged at down stream side with 6 friction elements to obtain forward 8 speeds. The latter multi-speed automatic transmission has a double-pinion type first planetary gear set arranged at upstream side and a second planetary gear sets arranged at down stream side consisting of a single-pinion type and double-pinion type planetary gear sets with 6 friction elements to obtain forward 8 speeds.

Another multi-speed automatic transmission is disclosed in Japanese patent laying-open publications (Tokkaihei) No. 04-219553. This transmission has a first planetary gear set to provide first fixed gear ratio and double-pinion type planetary gear sets with 5 friction elements to obtain forward 6 speeds.

The above known conventional multi-speed automatic transmissions, however, encounter such a problem that large torque from the first planetary gear set is inputted to a sun gear of the second planetary gear set at first gear, which restricts design freedom of gear ratios.

It is, therefore, an object of the present invention to provide a multi-speed automatic transmission for a motor vehicle which overcomes the foregoing drawbacks and can avoid inputting large torque generated at a first planetary gear set at low gear ratio to a sun gear of second planetary gear sets and obtain more than forward 5-speed with broadening design freedom of gear ratios.

According to the first aspect of the present invention there is provided a multi-speed automatic transmission for a motor vehicle comprising: an input shaft; an output shaft in coaxial arrangement with the input shaft; a first planetary gear set and second planetary gear sets which are interposed between the input shaft and the output shaft to change a rotational speed of the output shaft with respect to a rotational speed of the input shaft; the first planetary gear set having a first sun gear, a first ring gear, a first outer pinion meshed with the first ring gear, a first inner pinion meshed with the first outer pinion and the first sun gear, and a first carrier rotatably supporting the first inner pinion and the first outer pinion, the second planetary gear sets having a second sun gear, a second ring gear, a second pinion meshed with the second ring gear and the second ring gear, a third sun gear, a third ring gear, the third pinion, and a second carrier rotatably supporting the second pinion and the third pinion; and a case containing the first and second planetary gear sets, characterised by the first sun gear being fixed or fixable to the case, the first carrier being connected with the input shaft, the second carrier being connected with the output shaft, the third sun gear being meshed with the second pinion, the third pinion being meshed with the second pinion and the third ring gear, and including a first clutch for engaging the first ring gear and the second ring gear with each other, a second clutch for engaging the first ring gear and the second sun gear with each other, a third clutch for engaging the third ring gear and the input shaft, a first brake for fixing the third sun gear to the case; a second brake for fixing the third ring gear to the case, a first gear being established when the first sun gear is fixed to the case and the first clutch and the second brake are engaged, a second gear being established when the first sun gear is fixed to the case and the first clutch and the first brake are engaged, a third gear being established when the first sun gear is fixed to the case and the first and second clutches are engaged, a fourth gear being established when the first sun gear is fixed to the case and the first and third clutches are engaged, a fifth gear being established when the second and third clutches are engaged, and a sixth gear being established when the third clutch and the first brake are engaged.

Preferably, the multi-speed automatic transmission further comprises a third brake which can fix the first sun gear to the case, wherein the third brake is released with the first to third clutches being engaged to obtain a direct drive ratio of the second planetary gear sets at new fifth gear between the forth and fifth gears so that the automatic transmission has 7 speeds.

Preferably, the multi-speed automatic transmission further comprises a fourth clutch which directly connects the input shaft and the output shaft with each other or makes the second planetary gear sets to rotate in one united body to obtain a direct drive ratio thereof, wherein the fourth clutch is engaged at new fifth gear between the forth and fifth gears so that the automatic transmission has 7 speeds.

Preferably, the multi-speed automatic transmission further comprises a fifth clutch which connects the input shaft and the second sun gear with each other when the fifth clutch is engaged, wherein an intermediate gear between the third gear and the fourth gear is established when the first and fifth clutches are engaged, a gear of a direct drive ratio being established when the third and fifth clutches are engaged so that the automatic transmission has 8 speeds.

The objects, features and advantages of the present invention will become apparent as the description proceeds when taken in conjunction with the accompanying drawings, in which:
FIG. 1 is a skeleton diagram showing a power train of a multi-speed automatic transmission for a motor vehicle according to a first preferred embodiment of the present invention;
FIG. 2 is a shift table of a relation between states of friction elements and gears established thereby in the automatic transmission shown in FIG. 1;
FIG. 3 is a common velocity diagram of the multi-speed automatic transmission shown in FIG. 1;
FIG. 4 is a skeleton diagram showing a power train of a multi-speed automatic transmission for a motor vehicle according to a second preferred embodiment of the present invention;
FIG. 5 is a skeleton diagram showing a power train of a multi-speed automatic transmission for a motor vehicle according to a third preferred embodiment of the present invention;
FIG. 6 is a common velocity diagram of the multi-speed automatic transmission shown in FIG. 5;
FIG. 7 is a skeleton diagram showing a power train of a multi-speed automatic transmission for a motor vehicle according to a fourth preferred embodiment of the present invention;
FIG. 8 is a skeleton diagram showing a power train of a multi-speed automatic transmission for a motor vehicle according to a fifth preferred embodiment of the present invention;
FIG. 9 is a skeleton diagram showing a power train of a multi-speed automatic transmission for a motor vehicle to a sixth preferred embodiment of the present invention;
FIG. 10 is a common velocity diagram of the multi-speed automatic transmission shown in FIG. 9;
FIG. 11 is a skeleton diagram showing a power train of a multi-speed automatic transmission for a motor vehicle according to a seventh preferred embodiment of the present invention;
FIG. 12 is a shift table of a relation between states of friction elements and gears established thereby in the automatic transmission shown in FIG. 11; and
FIG. 13 is a common velocity diagram of the multi-speed automatic transmission shown in FIG. 11.

Throughout the following detailed description, similar reference characters and numbers refer to similar elements in all figures of the drawings.

A 6-speed automatic transmission for a motor vehicle of a first preferred embodiment according to the present invention will be described with reference to the accompanying drawings.

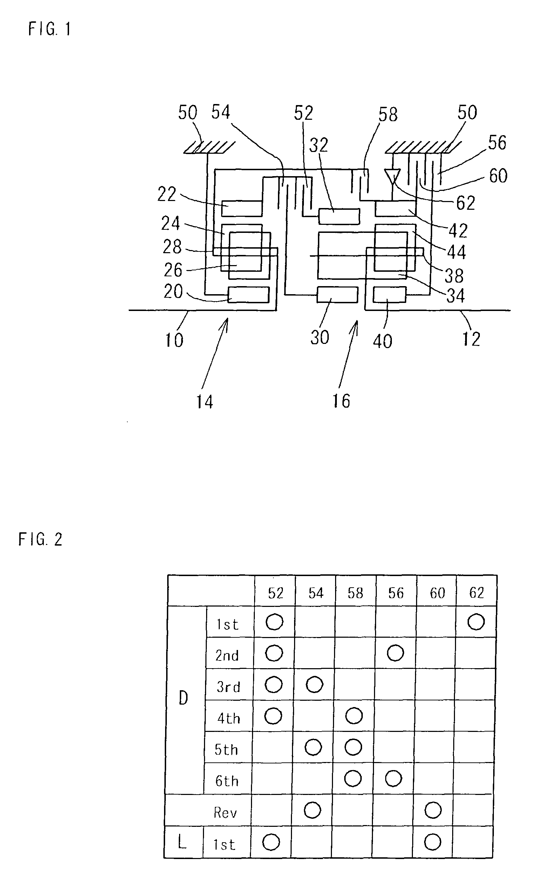

As shown in FIG. 1, the automatic transmission includes an input shaft 10, an output shaft 12, a first planetary gear set 14 and second planetary gear sets 16 arranged at downstream side of the first planetary gear set 14, all of which are arranged coaxially with one another in a case 50.

The first planetary gear set 14 is a double pinion type and has a first sun gear 20 fixed to the case 50, a first ring gear 22, a first outer pinion 24 meshed with the first ring gear 22, a first inner pinion 26 meshed with the first outer pinion 24 and the first sun gear 20, and a first carrier 28 rotatably supporting the first inner and outer pinions 24 and 26. The first carrier 28 is connected with the input shaft 10.

The second planetary gear sets 16 are of the Ravigneaux type and have a second sun gear 30, a second ring gear 32, a second pinion 34 meshed with the second sun gear 30 and the second ring gear 32, a third sun gear 40 meshed with the second pinion 34, a third ring gear 42, a third pinion 44 meshed with the second pinion 34 and the third ring gear 42, and a second carrier 38 rotatably supporting the second and third pinions 34 and 44. The second carrier 38 is extended inwardly passing through between the second sun gear 30 and the third sun gear 40 to be connected with the output shaft 12 positioned inside of the third sun gear 40, which is suitable for a front engine/rear wheel drive type vehicle.

The first ring gear 22 is connectable with the second ring gear 32 by a first clutch 52 and also connectable with the second sun gear 30 by a second clutch 54. The first carrier 28 is connectable with the third ring gear 42 by a third clutch 58.

The third sun gear 40 can be fixed to the case 50 by a first brake 56. The third ring gear 42 can be fixed to the case 50 by a second brake 60. Between the third ring gear 42 and the case 50, there is provided a one-way clutch 62, which allows the third ring gear 42 to be rotated only in a driven direction. Accordingly, the second brake 60 and the one-way clutch 62 are arranged in a parallel relation with each other between the third ring gear 42 and the case 50.

The first to third clutches 52, 54, and 58, the first and second brakes 56 and 60, and the one-way clutch 62 are operated according to a shift table shown in FIG. 2. In this table, "D," "Rev," and "L" indicate forward drive at D position, reverse drive at R position, and forward low-geared drive at L position respectively, and ○ designates that its corresponding element is engaged in power, while blank designates that its corresponding element is released.

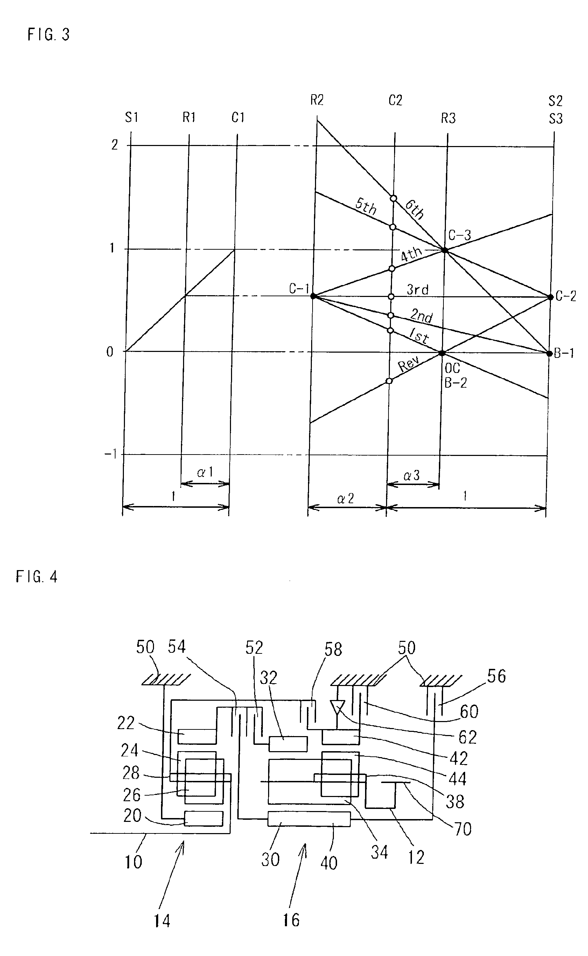

FIG. 3 shows a common velocity diagram of this 6-speed automatic transmission. The common velocity diagram is often used to show a relationship among velocities of rotatable members, a sun gear, a ring gear, and a carrier of a planetary gear set, and has vertical axes corresponding to the rotatable members and a horizontal axis positioned at velocity zero. The vertical axes are arranged along the horizontal axis at positions determined according to a ratio of (the teeth number of a sun gear) / (the teeth number of a ring gear) of a planetary gear set. An ordinate represents velocity of the corresponding rotatable element, and when it is beyond the horizontal axis its element is rotated in a driving direction, while when it is under the horizontal axis, its element is rotated in a driven direction. Note that each point, representing velocity of the rotatable members, on its corresponding vertical axis is always positioned on a straight line whatever gradient the linear line has, because the velocities of the rotatable members are in a linear relation.

In the common velocity diagram of this 6-speed automatic transmission, a rotational speed inputted from the engine is set to be 1, for easy calculating rotational speeds of the rotatable elements, and a vertical axis S 1 of the first sun gear 20, a vertical axis R1 of the first ring gear 22, a vertical axis C1 of the first carrier 28, a common vertical axis S2 and S3 of the second and third sun gears 30 and 40, a vertical axis R2 of the second ring gear 32, a vertical axis C2 of the second carrier 38, and a vertical axis R3 of the third ring gear 42 are positioned along the horizontal axis apart from each other according to a first ratio α1 of (teeth number of the first sun gear 20) / (teeth number of the first ring gear 22), a second ratio α2 of (teeth number of the second sun gear 30) / (teeth number of the second ring gear 32), and a third ratio α3 of (teeth number of the third sun gear 40) / (teeth number of the third ring gear 42).

First gear is established by engaging the first clutch 52 and the one-way clutch 62, which causes the first ring gear 22 and the second ring gear 32 to be connected and the third ring gear 42 to be halted respectively. The gear ratio of the first planetary gear set 14 is 1 / (1 ― α1), and the gear ratio of the second planetary gear sets 16 is (α2 +α3) / α3, thus making the gear ratio of the first gear to be (α2 +α3) / {α3·(1 - α1)}. Accordingly, the rotational speed of the output shaft 12 becomes smaller than the input shaft 10, while output torque becomes larger than input torque. Note that engine-braking can not be obtained at this first gear because the one-way clutch 62 allows the third ring gear 42 to be rotated in a driven direction.

At the first gear, as shown in FIG. 3, a straight line of the first planetary gear set 14 connects point zero of the axis S 1, for the first sun gear 20 is fixed to the case 50, and point 1 of the axis C1, for the first carrier 28 is connected with and inputted from the input shaft 10. This line intersects the axis R1, whose intersection represents output velocity of the first ring gear 22 and of the first planetary gear set 14. An ordinate on the axis R2 is the same altitude as the point of the first ring gear 22, for they are connected with each other by the first clutch 52. A point of the axis R3 is on zero, for the third ring gear 42 is fixed to the case 50 by the one-way clutch 62. Accordingly, a straight line of the secondary planetary gear sets connects the points on the axes R2 and R3, causes an output point corresponding to the output speed of the automatic transmission to be an intersection of this straight line and the axis C2 as output member.

Second gear is established by keeping the first clutch 52 to be engaged and engaging the first brake 56 to fix the third sun gear 40 to the case 50. This brings the third ring gear 42 automatically to be free from fixing to the case 50 and rotate in the driven direction by the one-way clutch 62. At this second gear, the gear ratio is (1 + α2) / (1 ― α1), which is smaller than the first gear ratio.

At the second gear, as shown in the common velocity diagram of FIG. 3, the point of the axis R2, inputted from the first planetary gear set 14, is the same as the first gear, and a point of the axis S3 becomes to be zero, for the third sun gear 40 is fixed to the case 50 by the first brake 56, where a straight line connects these points to intersect the axis C2 at higher position than the first gear.

A shift from the first gear to the second gear can be obtained by only engagement of the first brake 56, which enables a shift shock to be suppressed to achieve a smooth shifting.

Third gear is established by releasing the first brake 56 engaged at the second gear and engaging the second clutch 54. The engagement of the first and second clutches 52 and 54 makes the second planetary gear sets 16 rotate in one united body, which is indicated by a horizontal line in the common velocity diagram of FIG. 3. Accordingly, the gear ratio of the third gear is equal to the gear ratio of the first planetary gear set 14, 1 /(1 - α1).

Fourth gear is established by releasing the second clutch 54 engaged at the third gear and engaging the third clutch 58. The engaged third clutch 58 connects the third ring gear 42 and the input shaft 10 with each other, which is also kept at gears more than this fourth gear. As shown in FIG. 3, a rotational speed of the third ring gear 42 becomes to be equal to the input shaft 10, thereby the gear ratio of the fourth gear ratio being (α2 + α3) / {(1 - α1)(α2 + α3) +α1 ·α 2}.

At the fourth gear, as shown in the common velocity diagram of FIG. 3, the point of the axis R2, inputted from the first planetary gear set 14, is the same as the first gear, and a point of the axis R3 becomes to be 1, for the third clutch 58 connects the third ring gear 42 and the input shaft 10, where a straight line connects these points to intersect the axis C2 at higher position than the third gear.

Fifth gear is established by releasing the first clutch 52 engaged at the first to fourth gears and engaging the second clutch 54. The second clutch 54 connects the second sun gear 30 and the first ring gear 22 with each other. At the fifth gear, the second sun gear 30 is engaged again with the first ring gear 22. The gear ratio of the fifth gear is (1 ― α3) / {(1 ― α1)(1 ― α3) + α1}, an over-drive ratio.

At the fifth gear, as shown in the common velocity diagram of FIG. 3, the point of the axis R3 is kept to be 1, and a point on the axis S2 becomes the same altitude as the first ring gear 22, for the second clutch 54 connects the first ring gear 22 and the second sun gear 30, where a straight line connects these points to intersect the axis C2 at higher position than the fourth gear and higher than 1.

Sixth gear is established by releasing the second clutch 54 engaged at the fifth gear and engaging the first brake 56 to fix the third sun gear 40 to the case 50. The gear ratio is 1 ―α3, an over-drive ratio.

At the sixth gear, as shown in the common velocity diagram of FIG. 3, the point of the axis R3 is kept to be 1, and a point on the axis S2 becomes to be zero, for the first brake 56 fixes the third sun gear 40 to the case 50, where a straight line connects these points to intersect the axis C2 at higher position than the fifth gear.

Reverse gear is established by engaging the second clutch 54 and the second brake 60, thereby connecting the first ring gear 22 and the second sun gear 30 with each other and fixing the third ring gear 42 to the case 52. At the reverse gear, an engine rotational speed is reduced by the first planetary gear set 14 and its reduced output speed is transmitted to the second sun gear 30 through the first ring gear 22, where is reduced by the secondary planetary gear sets. The gear ratio of the reverse gear is (α3 - 1) / {α3·(1 ― α1)(1 ― α3)}.

First gear at the low position is established by engaging the first clutch 52 and the second brake 60, thereby connecting the first ring gear 22 and the second ring gear 32 with each other and fixing the third ring gear 42 to the case. Gear ratio of the first gear at the low position is the same as the first gear, while an engine-braking can be obtained at the first gear at the low position because the third ring gear 42 is restrict to be rotated in any direction.

At the reverse gear, as shown in the common velocity diagram of FIG. 3, the point of the axis S2 is the same as the first ring gear 22, and a point on the axis R3 becomes to be zero, for the second brake 60 fixes the third ring gear 42, where a straight line connects these points to intersect the axis C2 under the horizontal axis. This means the second carrier 38 as the output member of the automatic transmission is rotated in a direction opposite to a drive direction of the input shaft 10.

Therefore, the gear ratios from the first to sixth and the reverse gear become to be 4.548, 2.727, 1.818, 1.219, 0.817, 0.669, ― 3.642 respectively, where, for example, α1 = 0.45, α2 = 0.50, and α3 = 0.333. This results in that the gear step between the first and second gears, between the second and third gears, between the third and fourth gears, between the fourth and fifth gears, and between the fifth and sixth gears become 1.668, 1.500, 1.491, 1.492, and 1.225 respectively, which is suitable for an automatic transmission driven by an internal combustion engine.

This automatic transmission can obtain forward 6-speeds by five friction elements, such as clutches and brakes, and make a dimension of the second planetary gear sets 16 to be smaller to reduce its weight and manufacturing cost, because the second ring gear 32, having a large diameter, receives large torque from the first planetary gear set inputted to the second planetary gear sets 16 at low speed ratio, so that its dedendum stress becomes smaller. Besides, this automatic transmission is suitable for a front engine/rear wheel drive vehicle, because the output shaft 12 extends rearward in coaxial with the input shaft 10.

Next, a 6-speed automatic transmission for a motor vehicle of a second preferred embodiment according to the present invention will be described with reference to the accompanying drawings.

As shown in FIG. 4, the automatic transmission of the second embodiment differs from the first embodiment in the following part: a second sun gear 30 and a third sun gear 40 are united with each other. A second carrier 12 of second planetary gear sets 16 is connected with an output gear 70 positioned between the third sun gear 40 of the second planetary gear sets 16 and a first brake 56. The other parts are similar to the first embodiment shown in FIG. 1.

Engagement and disengagement of friction elements used in the automatic transmission of the second embodiment are similar to the first embodiment shown in FIG. 2. The automatic transmission has similar advantages of the first embodiment except that it is suitable for a front engine/front wheel drive vehicle, not for a front engine/rear wheel drive vehicle like the first embodiment.

A 7-speed automatic transmission for a motor vehicle of a third preferred embodiment according to the present invention will be described with reference to the accompanying drawings.

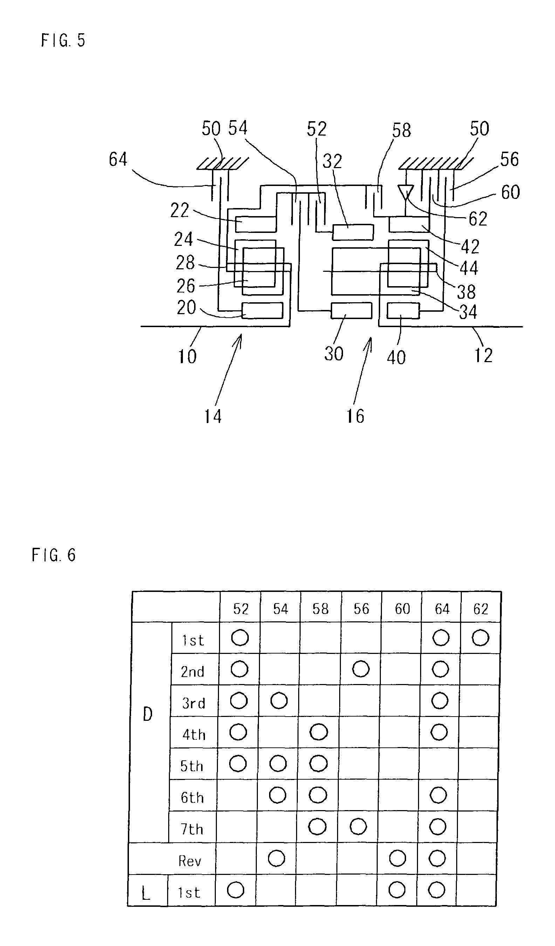

As shown in FIG. 5, the automatic transmission of the third embodiment differs from the first embodiment in the following part: a first sun gear 20 of a first planetary gear set 14 is connectable with a case 50 by a third brake 64 to be braked. The other parts of this automatic transmission are similar to the first embodiment shown in FIG. 1.

FIG. 6 shows a shift table of relationship between the states of friction members and gears established thereby. This table differs from the first embodiment in the following parts: the third brake 64 is engaged at forward first to fourth and sixth and seven gears, reverse gear, and forward low gear. Moreover, a first clutch 52 is engaged at fifth gear, a second clutch 54 is engaged at sixth gear, and the automatic transmission has 7-speed where a third clutch 58, a first brake 56, and the third brake 64 are engaged.

Engagement and disengagement of friction elements and gear ratios are similar to the first embodiment from a first gear to the fourth gear, and those ones at sixth and seventh gears are similar to the fifth and sixth gears of the first embodiment, while gear ratio at fifth gear is 1, a direct gear ratio.

Therefore, the gear ratios from the first to seventh and the reverse gear become to be 4.548, 2.727, 1.818, 1.219, 1.00, 0.817, 0.669, ― 3.642 respectively, where, teeth number ratios of (sun gear) / (ring gear) of planetary gear sets are set, for example, α1 = 0.45, α2 = 0.50, and α3 = 0.333. This results in that the gear step between the first and second gears, between the second and third gears, between the third and fourth gears, between the fourth and fifth gears, and between the fifth and sixth gears become 1.668, 1.500, 1.491, 1.219, 1.225, 1.224 respectively, which is suitable for an automatic transmission driven by an internal combustion engine.

This automatic transmission is suitable for a front engine/rear wheel drive vehicle, and can improve fuel economy and purification of emission from an internal combustion engine, because it can be controlled by 7-speeds, obtained by adding the third brake 64, more accurately than 6-speed automatic transmission. It also has advantages similar to the first embodiment.

A 7-speed automatic transmission for a motor vehicle of a fourth preferred embodiment according to the present invention will be described with reference to the accompanying drawings.

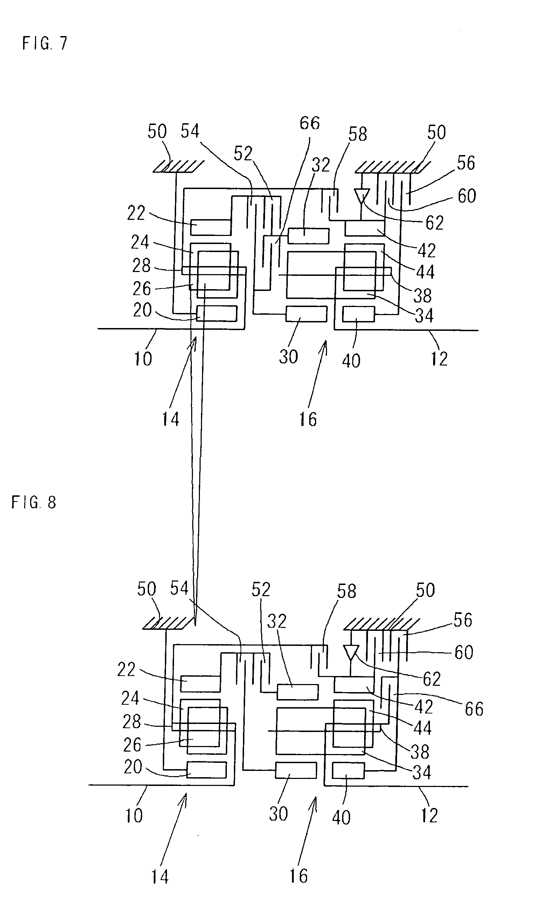

As shown in FIG. 7, the automatic transmission of the fourth embodiment differs from the first embodiment in the following part: a second ring gear 32 of second planetary gear sets 16 and a second sun gear 30 of the second planetary gear sets 16 are connectable with each other by a fourth clutch 66. The other parts of the fourth embodiment are similar to the first embodiment shown in FIG. 1.

When the fourth clutch 66 is engaged, the second planetary gear sets 16 are rotated in one united body. In this state, the input shaft 10 and the output shaft 12 is connected with each other at gear ratio of 1, a direct drive ratio, when the third clutch 58 is engaged. A shift table of this automatic transmission can be obtained by replacing the fourth clutch 66 instead of the third brake 64 in the shift table shown in FIG. 6 and reversing relation between their engagement and disengagement to engage the fourth clutch 66 at fifth gear, which brings this automatic transmission forward 7-speeds including the fifth gear at gear ratio of 1 and the same gear ratios as the third embodiment. Therefore, this 7-speed automatic transmission has advantages similar to the third embodiment.

Note that the fourth clutch 66 can make the second planetary gear sets 16 rotate as one united body by connecting any two rotatable members of the second planetary gear sets 16.

Next, a 7-speed automatic transmission for a motor vehicle of a fifth preferred embodiment according to the present invention will be described with reference to the accompanying drawings.

As shown in FIG. 8, the automatic transmission of the fifth embodiment differs from the first embodiment in the following part: a second carrier 38 of second planetary gear sets 16 and a third sun gear 40 of the second planetary gear sets 16 are connectable with each other by a fourth clutch 66. The other parts are similar to the first embodiment shown in FIG. 1.

Engagement of the fourth clutch 66 makes the second planetary gear sets 16 to rotate in one united body, so that an input shaft 10 and an output shaft 12 are connected by engaging the third clutch 58 to obtain gear ratio of 1.

Engagement and disengagement of friction elements, gear ratios, and advantages are similar to the fourth embodiments.

Next, a 7-speed automatic transmission for a motor vehicle of a sixth preferred embodiment according to the present invention will be described with reference to the accompanying drawings.

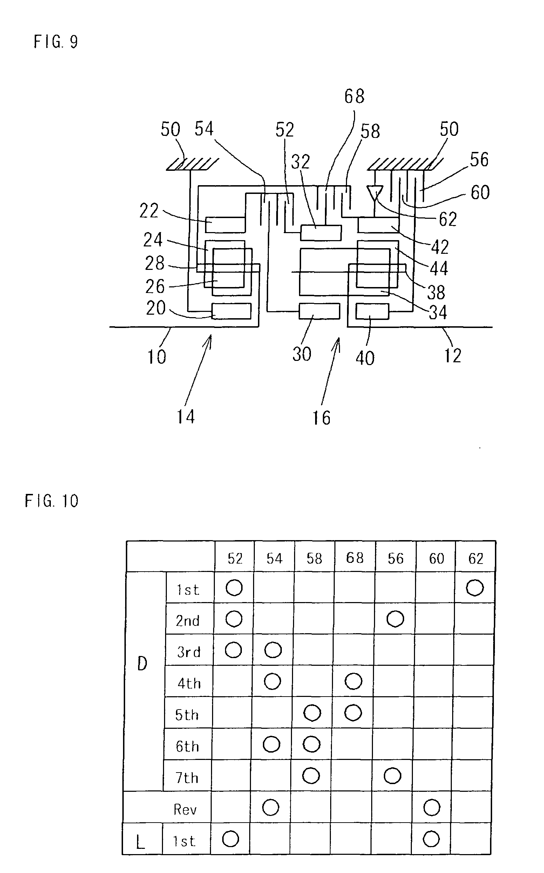

As shown in FIG. 9, the automatic transmission of the sixth embodiment differs from the first embodiment in the following part: the second ring gear 32 of the second planetary gear sets 16 and an input shaft 10 are connectable with each other by a fifth clutch 68. The fifth clutch 68 is engaged at fourth gear with a second clutch 54 engaged, and engaged at fifth gear with a third clutch 58, as shown in a shift table of FIG. 10. Besides, the fourth clutch 66 of the fifth embodiment is removed. The other parts are similar to the fifth embodiment shown in FIG. 8.

In this automatic transmission, gear ratios at first to third gears are the same as the first embodiment. Gear ratio at fourth gear is (1 + α2) / {(1 - α1)( 1 + α2) + α1. α2}, and the second planetary gear sets 16 rotates in one united body at gear ratio of 1 when the third clutch 58 and the fifth clutch 68 are engaged at fifth gear.

The gear ratios from the first to seventh and the reverse gear become to be 4.921, 2.926, 1.852, 1.203, 1.00, 0.801, 0.650, ― 3.439 respectively, where, teeth number ratios of (sun gear) / (ring gear) of planetary gear sets are set, for example, α1 = 0.46, α2 = 0.58, and α3 = 0.35. The gear step between the first and second gears, between the second and third gears, between the third and fourth gears, between the fourth and fifth gears, and between the fifth and sixth gears become 1.682, 1.580, 1.539, 1.203, 1.248, 1.233 respectively, which is suitable for an automatic transmission driven by an internal combustion engine.

A shift table may be used the same one as shown in FIG. 6, where a first and third clutches 52 and 58 are engaged at the fourth gear. Therefore, this 7-speed automatic transmission has advantages similar to the third embodiment.

Next, an 8-speed automatic transmission for a motor vehicle of a seventh preferred embodiment according to the present invention will be described with reference to the accompanying drawings.

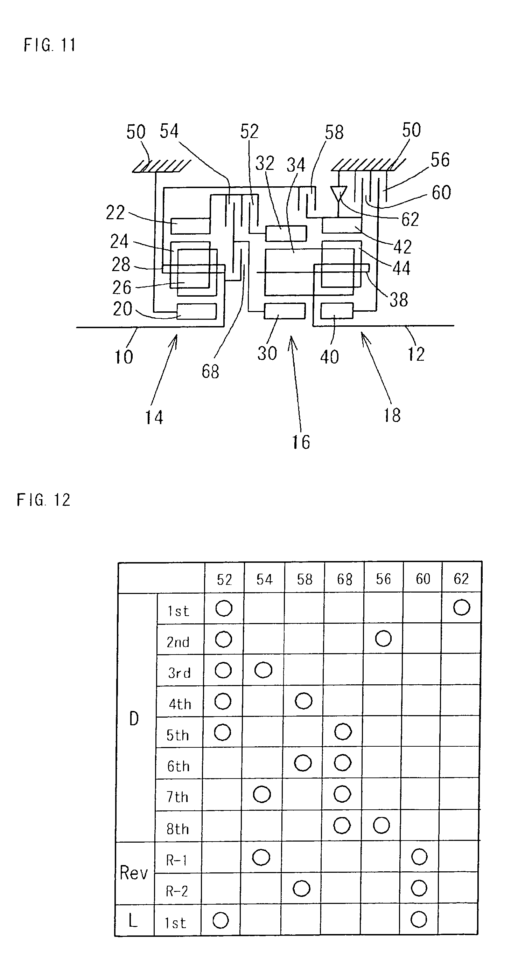

As shown in FIG. 11, the automatic transmission of the seventh embodiment differs from the first embodiment in the following part: the second sun gear 30 of the second planetary gear sets 16 and an input shaft 10 are connectable by a fifth clutch 68 instead of the fifth clutch 68 of the fifth embodiment at fifth to eighth gears. Besides, the fourth clutch 66 of the fifth embodiment is removed. The other parts are similar to the fifth embodiment shown in FIG. 8.

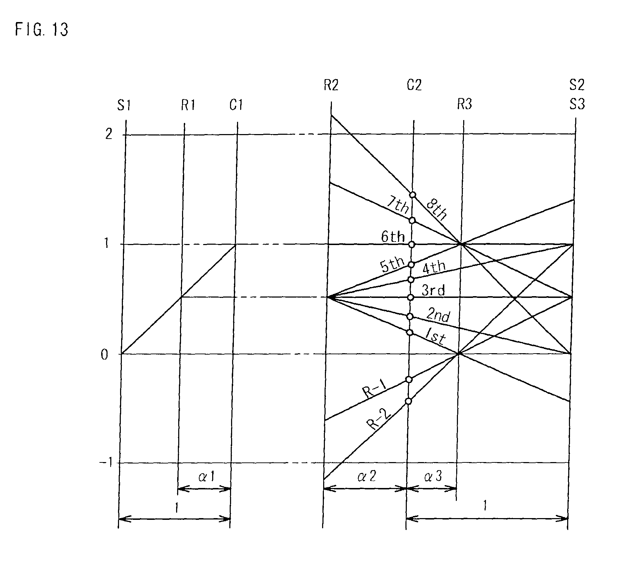

FIG. 12 shows a shift table of this automatic transmission, and FIG. 13 shows its common velocity diagram. This automatic transmission can obtain forward 8-speeds and have advantages similar to the third embodiment.

Although the inner pinion and the outer pinion are described as one pinion in the planetary gear set respectively in the description and drawings of the above embodiments for convenience, a plurality of inner pinions and outer pinions are usually used in a planetary gear set. Preferably, they are three or four.

While there have been particularly shown and described with reference to preferred embodiments thereof, it will be understood that various modifications may be made therein, and it is intended to cover in the appended claims all such modifications as fall within the true spirit and scope of the invention.

## Claims

1. A multi-speed automatic transmission for a motor vehicle comprising:
an input shaft (10);
an out put shaft (12) arranged in coaxial with said input shaft (10);
a first planetary gear set (14) and second planetary gear sets (16) which are interposed between said input shaft (10) and said output shaft (12) to change a rotational speed of said output shaft (12) with respect to a rotational speed of said input shaft (10); said first planetary gear set (14) having a first sun gear (20), a first ring gear (22), a first outer pinion (24) meshed with the first ring gear (22), a first inner pinion (26) meshed with the first outer pinion (24) and the first sun gear (20), and a first carrier (28) rotatably supporting the first inner pinion (26) and the first outer pinion (24), said second planetary gear sets (16) having a second sun gear (30), a second ring gear (32), a second pinion (34) meshed with the second ring gear (32) and the second sun gear (30), a third sun gear (40), a third ring gear (42), a third pinion (44), and a second carrier (38) rotatably supporting the second pinion (34) and the third pinion (44); and
a case (50) containing said first and second planetary gear sets (14, 16),
**characterised by**
the first sun gear (20) being fixed or fixable to said case (50),
the first carrier (28) being connected with said input shaft (10),
the second carrier (38) being connected with said output shaft (12),
the third sun gear (40) being meshed with the second pinion (34),
the third pinion (44) being meshed with the second pinion (34) and the third ring gear (42), and including
a first clutch (52) for engaging the first ring gear (22) and the second ring gear (32) with each other,
a second clutch (54) for engaging the first ring gear (22) and the second sun gear (3 0) with each other,
a third clutch (58) for engaging the third ring gear (42) and said input shaft (10),
a first brake (56) for fixing the third sun gear (40) to said case (50);
a second brake (60) for fixing the third ring gear (42) to said case (50),
a first gear being established when the first sun gear (20) is fixed to said case (50) and the first clutch (52) and the second brake (60) are engaged, a second gear being established when the first sun gear (20) is fixed to said case (50) and the first clutch (52) and the first brake (56) are engaged, a third gear being established when the first sun gear (20) is fixed to said case (50) and the first and second clutches (52, 54) are engaged, a fourth gear being established when the first sun gear (20) is fixed to said case (50) and the first and third clutches (52, 58) are engaged, a fifth gear being established when the second and third clutches (54, 58) are engaged, and a sixth gear being established when the third clutch (58) and the first brake (56) are engaged.

2. A multi-speed automatic transmission for a motor vehicle as set forth in claim 1, which further comprises a third brake (64) which can fix the first sun gear (20) to said case (50), wherein the third brake (64) is released with the first to third clutches (52, 54, 58) being engaged to obtain a direct drive ratio of said second planetary gear sets (16) at a new fifth gear between the forth and fifth gears so that the automatic transmission has 7 speeds.

3. A multi-speed automatic transmission for a motor vehicle as set forth in claim 1, which further comprises a fourth clutch (66) which directly connects said input shaft (10) and said output shaft (12) with each other or makes said second planetary gear sets (16) to rotate in one united body to obtain a direct drive ratio thereof, wherein the fourth clutch (66) is engaged at new fifth gear between the forth and fifth gears so that the automatic transmission has 7 speeds.

4. A multi-speed automatic transmission for a motor vehicle as set forth in claim 1, which further comprises a fifth clutch (68) which connects said input shaft (10) and the second sun gear (30) with each other when the fifth clutch (68) is engaged, wherein an intermediate gear between the third gear and the fourth gear is established when the first and fifth clutches (52, 68) are engaged, a gear of a direct drive ratio being established when the third and fifth clutches (58, 68) are engaged so that the automatic transmission has 8 speeds.
